# EUROPEAN PATENT SPECIFICATION

(11) **EP 1 484 465 B1**
(45) Date of publication and mention of the grant of the patent: **04.10.2017**
(21) Application number: 03012884.7
(22) Date of filing: 06.06.2003
(51) Int. Cl.: E05F 15/619, E05F 11/06, F16H 19/06

(54) **Linear actuator with drive chains connectable by interlocking engagement members**
Linearantrieb mit durch ineinandergreifende Verbindungselemente verbindbaren Schubketten
Actionneur linéaire avec chaînes d'entraînement connectables par des éléments interverrouillables

(43) Date of publication of application: 08.12.2004
(73) Proprietor: WindowMaster A/S, 2950 VEDBÆK (DK)
(72) Inventor: Soerensen, Jens Joerren, 2300 Koebenhavn S. (DK)
(74) Representative: Tellefsen, Jens J.

(56) References cited:
- GB-A- 422 781
- GB-A- 2 159 600
- US-A- 5 271 182

## Description

The present invention relates to multiple interlocking chain assemblies. More specifically, the invention relates to an element for interlocking two or more chains in a releasable manner. The invention also relates to a chain provided with a plurality of these elements. The invention relates further to an actuator comprising two or more of these chains. Moreover, the invention relates to different methods for producing the elements for interlocking two or more chains.

### BACKGROUND OF THE INVENTION

EP-B-1 165 921 discloses an actuator for opening and closing a door or a window, comprising a motor-driven double-chain operator with two chain members, both flexible in one direction only. The members are accommodated in their retracted position in an operator housing, in which the chain members are individually in engagement with a rotating drive member in communication with outlet openings for the chain members, and separate chain paths connected therewith, from which the chain members may be joined in a back-to-back arrangement for the provision of a rigid operator member. The two chain members are composed of chain links having hinge parts with parallel rotational axes oriented transversely to the direction of propagation of the chain member in the associated chain path in the operator housing for engagement with neighboring chain links in the same chain member and having a back surface provided with slide fastener like engagement members for engagement with corresponding engagement members on the back surfaces of adjacent chain links in the other chain member for securing the chain members in the joined actuator member against displacement transversely to the opening/closing direction. GB-A-422,781 discloses a similar double chain actuator of the same type in which the two chain members in the housing are guided in separate chain paths, which throughout their entire length are bound to extend in a common plane, whereby a desired length of the operator member composed of the chain members requires a comparatively bulky housing. These known double chain actuators are constructed with dedicated and complicated links that allow the backs of the chains to be releasably connected to one another in a slide fastener like manner. The complex shape of these links, and the low production volume of these dedicated chains renders them relatively expensive to manufacture.

### DISCLOSURE OF THE INVENTION

On this background, it is an object of the present invention to provide a less expensive and more versatile way to create a multiple interlocked chain assembly. This object is achieved in accordance with claim 1 by providing an interlocking engagement member for insertion into the openings of a chain, the interlocking engagement member having an interlocking end and an opposite chain engagement end for retaining the interlocking engagement member in the opening of the chain concerned.

The interlocking engagement member allows two standard chains, such as e.g. a bicycle chain, to interlock in a releasable manner. Two or more interlocked standard chains can be used to form an actuator member that can push and pull and is stable against displacement transversely to the actuating direction. Since standard chains are mass produced they are significantly less expensive than the prior art chains discussed above. The general availability of standard chains also facilitates replacement upon failure. Further, the large number of standard chain types that is available on the market increases the design freedom for a constructor of push-pull chain actuators.

The chain is a chain that comprises driving pins with or without rollers. The chain engagement end is provided with projections that engage the pins or rollers for retaining the interlocking engagement member.

The interlocking end is provided with a projection on one side and a corresponding recess on the opposite side, whereby the projection is suitable for engaging the recess of another interlocking engagement member of the same type.

The interlocking end is preferably suitable for interlocking with other interlocking ends of other interlocking engagement members of the same type when two or more strings of staggered interlocking elements are engaged like a slide fastener.

The chain engagement end can be provided with a recess for receiving a tooth of a sprocket. The recess can extend transversely over the chain engagement end or lengthwise over the chain engagement end, either centrally or on one side of the chain engagement end.

The interlocking end can be cranked relative to the chain interlocking engagement member opposite to the end face of the chain engagement end. The shoulder can be used as a contact surface for guide planes of a chain path.
The end face of the chain engagement can have a curved contour for facilitating smooth contact with a guide surface of a chain path.

It is another object of the present invention to provide a drive chain suitable for interlocking releasably with another chain of the same type. This object is achieved in accordance with claim 2 by providing a drive chain comprising links connected by parallel driving pins with or without rollers and a plurality of interlocking engagement members inserted into the openings of the chain, the interlocking engagement members having an interlocking end and an opposite chain engagement end for retaining the interlocking engagement member in the opening of the chain concerned.

Thus, any standard chain, can be converted into a chain that can be releasably interlocked with another chain to form a stable drive member.

The links of the chain can be formed by cords or cables to form a cable drive chain.

Alternatively, the links can be formed by plates, either by pairs of inner link plates and outer link plates or by identical pairs of cranked plates.

It is another object of the present invention to provide a linear actuator comprising two or more chain members. This object is achieved in accordance with claim 5 by providing a linear actuator with two or more chain members comprising rollers and a plurality of interlocking engagement members inserted into the openings of the chain, the interlocking engagement members having an interlocking end and an opposite chain engagement end for retaining the interlocking engagement member in the opening of the chain concerned, the chain members in their retracted position being accommodated in separate chain paths in an actuator housing in communication with chain exit openings and at

least one of the chain members being in engagement with a drive member, the chain members in their extended position being connected to one another by the interlocking engagement members for forming a joint actuator member.

The drive member in the actuator can be a sprocket.

The teeth of the sprocket may enter a transversely extending recess in the chain engagement end of the interlocking members for engaging the latter to drive the chain.

Alternatively, the teeth of the sprocket may enter a lengthwise extending recess in the chain engagement end of the interlocking members for engaging a drive pin or roller to drive the chain.

The chain member may comprise inner link plates and outer link plates connecting the drive pins. In this case the teeth of the sprocket may enter the space between the outer link plates to engage the latter for driving the chain.

The drive member can be a linear drive, such as a spindle drive, that engages a chain end. Such an drive member can be advantageous if very slim actuator housings are required. Alternatively, the drive member can be a wormwheel.

The chain member can be a duplex chain with first and second integral chain members side by side, the chain openings of the first chain member not being provided with interlocking engagement members, the chain openings of the second chain members being provided with interlocking engagement members and the drive member engaging the first chain member.

The linear actuator may comprise three or more chain members that in the extended state form an omnidirectionally stable drive member.

The interlocking engagement members may engage chain path guide surfaces for guiding the chain in the chain path. A curved contour of the chain engagement end of the interlocking engagement members may engage a chain path guide surface. The rollers may engage a chain path guide surfaces for guiding the chain in the chain path. The links may engage the chain path guide surfaces for guiding the chain in the chain path.

The interlocking ends may extend under the plates of the opposite chain member to secure the chain members against transverse displacement.

Further objects, features, advantages and properties of the interlocking engagement member, chain member and actuator according to the invention will become apparent from the detailed description.

### BRIEF DESCRIPTION OF THE DRAWINGS

In the following detailed portion of the present description, the invention will be explained in more detail with reference to the exemplary embodiments shown in the drawings, in which:
Fig. 1 shows an actuator according to an embodiment of the invention in an elevated view,
Fig. 2, is a plain side view on an preferred embodiment of the interlocking engagement member according to the invention,
Fig. 2a is an end view on the interlocking engagement member shown in Fig. 2,
Fig. 3. is an elevated view on the interlocking engagement member shown in Fig. 2,
Fig. 4 shows a detail of the free end of the interlocked chain members and interlocking engagement members of the actuator of Fig. 1,
Fig. 5 is the same view as Fig. 4 with the chains removed to show the interlocking engagement members,
Fig. 6 shows an enlarged section of Fig. 1, with actuator housing and one of the chain members removed for facilitating the visibility on the components of the device,
Fig. 7 shows a further enlarged view from below in detail of the chain exits in Fig. 1 with the housing hidden,
Fig. 8 is a plain side view on another preferred embodiment of the interlocking engagement member according to the invention,
Fig. 8a shows a preferred embodiment of a sprocket according to the invention,
Fig. 9 shows a detail of the free end of the interlocked chain members and interlocking engagement members, according to the preferred embodiment of Fig. 8,
Fig. 10 shows an elevated view of another preferred construction for the chain member,
Fig. 11 shows an elevated view of a further preferred construction for the chain member,
Fig. 12 and 13 shows different elevated views of a further preferred construction for the chain member,
Fig. 14 shows a car lift that is actuated by a pair of triplex chains that are provided with interlocking engagement members according to the invention,
Fig. 15 shows three interconnected chain members provided with another preferred embodiment of the interlocking engagement members according to the invention,
Fig. 16. is a perspective view of the interlocking engagement member used in Fig. 15,
Fig. 17 is a view from another angle of the interlocking engagement member shown in Fig. 16,
Fig. 18 is the same view as Fig. 15 with the chain members hidden to show the interlocking engagement members in an interlocked arrangement,
Fig. 19 is an end view on the three interlocked chain members of Fig. 15,
Fig. 20 shows four interconnected chain members provided with a further preferred embodiment of the interlocking engagement members according to the invention,
Fig. 21 is a perspective view of the interlocking engagement member used in Fig. 20,
Fig. 22 is the same view as Fig. 20 with two chain members and their interlocking engagement members hidden,
Fig. 23 is the same view as Fig. 20 with the chain members hidden to show the interlocking engagement members in an interlocked arrangement,
Fig. 24 is an end view on the four interlocked chain members of Fig. 20, and
Fig. 25 shows a blank used for producing interlocking engagement members.

### DETAILED DESCRIPTION

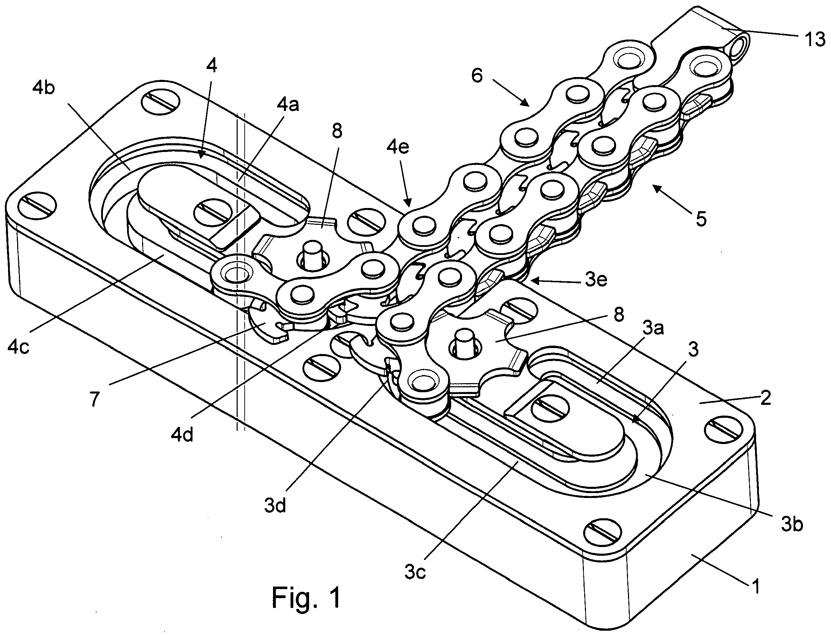

The actuator shown in Fig. 1 is composed of a housing 1 and a guide plate 2. The housing may be made as a cast shell profile or be machined from a solid block. The upper side of the actuator for the provision of a substantially closed housing can be closed upwards by a cover plate (not shown). When used as a window or door operator for a window or a door with an openable sash structure, the operator housing will normally be mounted on or in a sash or frame profile which is perpendicular to the opening/closing direction, whereas the free end of the double operator member, which is composed of the chain members described in detail in the following, will be mounted on the opposite frame or sash profile as known per se from the above-mentioned European patent EP-B-1 165 921.

The housing 1 is provided with a chain path 3 extending through a first linear section 3a, a substantially semicircular transition section 3b at one end of the housing part 1 and a section 3c in parallel with a side wall of the housing part towards a 90° bend 3d in a chain exit 3e.

In the opposite side of the housing 1 a second chain path 4 is provided having two part sections 4a, 4c in parallel with side walls of the housing part 3, said part sections being connected through a substantially semicircular transition section 4b, the part section 4d ending through a 90° bend in a chain exit 4e positioned side-by-side with the chain exit 3e separated therefrom by a partition member formed by a protrusion of the guide plate 2, constituting a separation between the chain path 3 and the chain path 4.

The bends of the chain path sections 3d and 4d have preferably a smaller radius of curvature as the semicircular transition sections 3b and 4b.

The chain paths 3 and 4 can be provided with ramped sections (not shown) in order to transport the chain members to a higher or lower level so that the chain members can be stored in a plurality of levels within the actuator housing, thus increasing chain storing capacity of the actuator.

A chain member 5 is received in the chain path 3 and a chain member 6 is received in the chain path 4. The free ends of the chain members 5,6 extend in parallel in an interlocked back to back engagement from the chain exits 3e and 4e to from a stable actuating member that can be used both to pull and to push. The free ends of the chain members 5,6 are attached to a holder 13. The holder 13 self is connected to the object to be actuated, e.g. in case of a window actuator it is pivotally connected to a window sash (not shown).

The chain paths 3 and 4 are substantially throughout their length limited by the guide surfaces 2a,2b of the guide plate 2, forming guides for the propagation of the chain members described in the following. The guiding of the chain members during the propagation in the chain paths 3 and 4 may, however, take place in a different manner, for instance by the walls of the chain path itself.

The drive members accommodated on the housing 1 comprise in the embodiment shown two sprockets 8 and positioned on the housing on each side of the outlet openings 3e and 4e. The sprockets 8 are placed on shafts that are connected with a drive motor (not shown) with reversible rotational direction.

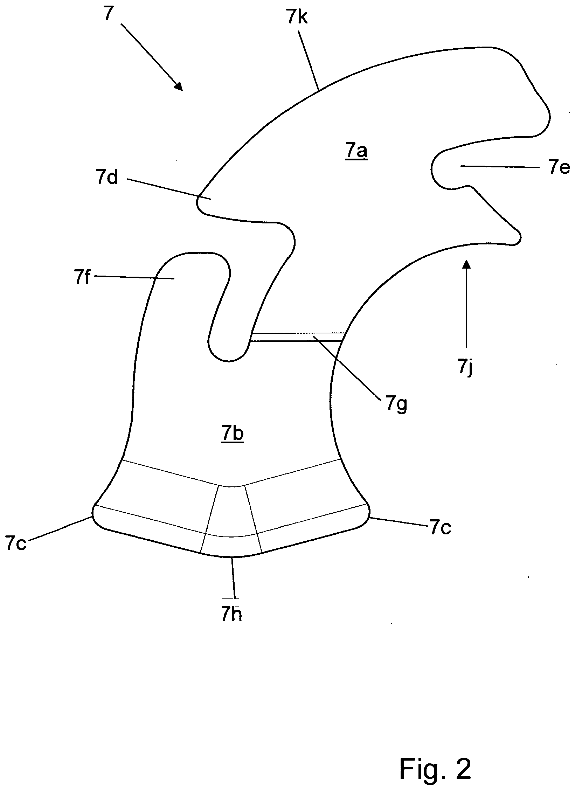

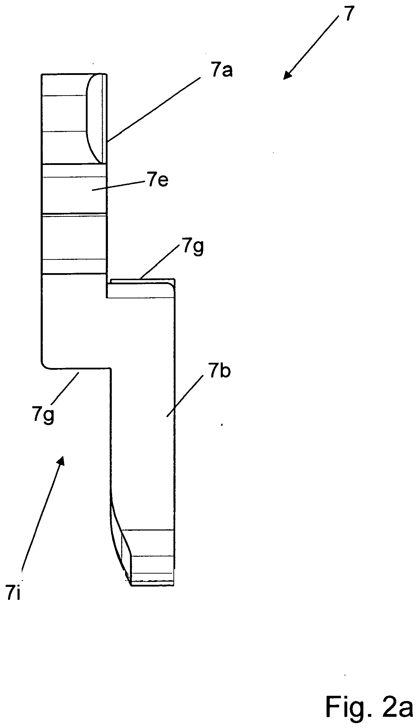

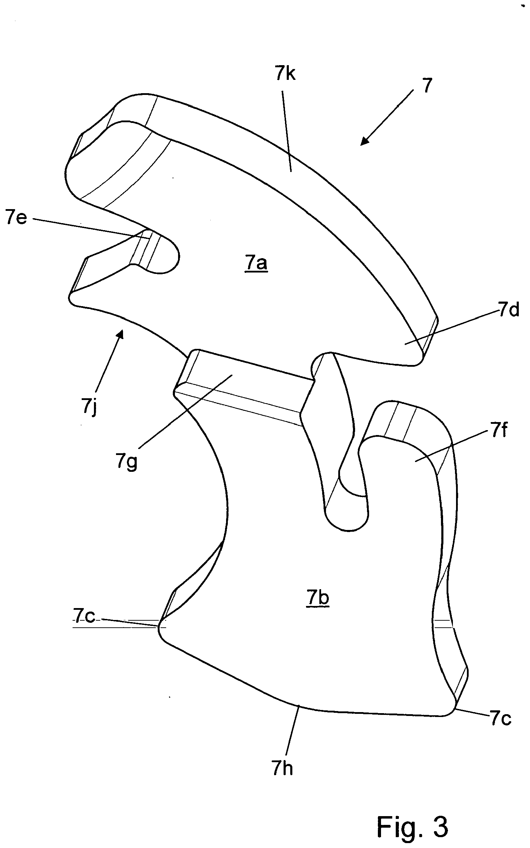

The chain members 5,6 are interlocked by interlocking engagement members 7 that are shown in a preferred embodiment in detail in Figs. 2,2a and 3. The interlocking engagement member 7 has an interlocking end 7a and a chain engagement end 7b. The interlocking end 7a is cranked relative to the chain engagement end 7b, thus providing a recess 7i. There is a shoulder 7g on each side of the interlocking engagement member 7. The chain engagement end 7b is provided with protrusions 7c that give the chain engagement end a width that is greater than the width of the chain openings. Thus, the interlocking engagement members 7 can be inserted into the chain openings from one side, but they cannot move onwards and leave the chain opening from the other side. The interlocking engagement members 7 are inserted into the openings of the chain and are in a staggered relation. The end surface of the chain interlocking end 7a is provided with a convexly curved contour 7k that facilitates sliding contact with the guide surface 2b of the guide plate 2. The convexly curved contour 7k also forms and abutment surface for the rollers 12. The opposite surface of the chain interlocking end 7a is provided with a concavely curved contour 7j that also serves as an abutment surface with the rollers 12. The curved contours 7j and 7k maintain the required distance between the chain members 5,6 and an oppositely arranged recess 7e. The protrusion 7d locks into the recess 7e of the next interlocking engagement member 7 of the opposite chain member 5,6, all along the interlocked length of the chain members 5,6. The chain engagement end 7b is further provided with a retaining lip 7f that extends towards the interlocking end 7a. The retaining lip lies in the same plane as the chain engagement end 7b.

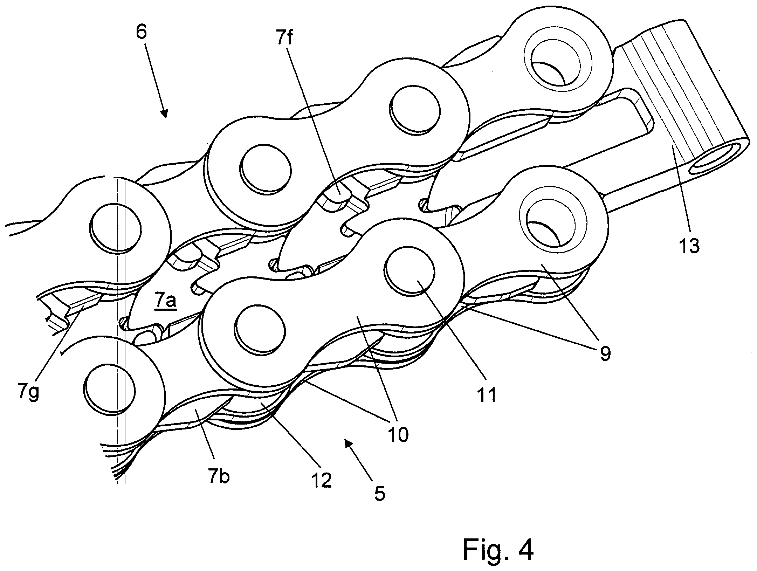

As shown in Fig. 4 (shows the opposite side of the chain members 5,6 compared to Fig. 1), a part of the retaining lip 7f extends along the side surface of the interlocking engagement end 7a of the opposite interlocking member 7 and thus prohibits transverse movement of the interlocking members 7 and consequently also of the chain members 5,6 relative to one another. The chain members 5,6 are formed by pairs of inner plates 9 and pairs of outer plates 10 connected by parallel driving pins 11 with rollers 12.

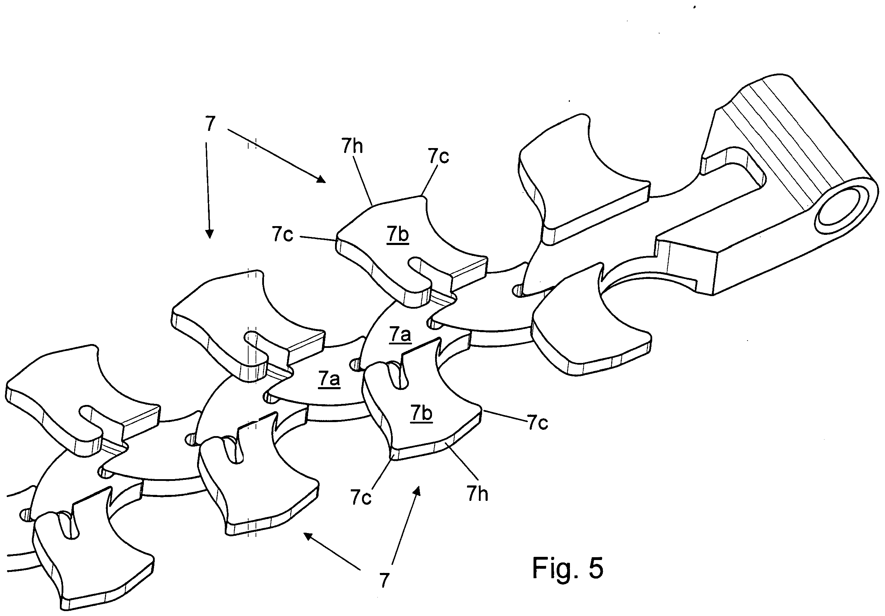

In Fig. 5 the chain members 5,6 have been hidden to show how the interlocking engagement members 7 engage and interlock.

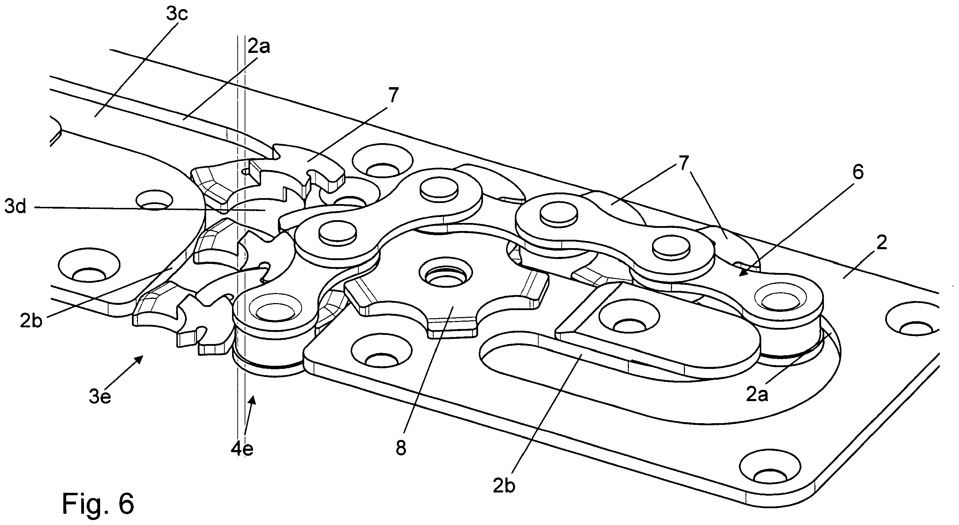

Fig. 6 shows the guide plate 2 and the sprocket 8 in detail. The chain member 5 is hidden in to show the positions of the interlocking engagement members 7 in the chain path 3. The rollers 12 are in contact with the guide surfaces 2a of the guide plate 2 to ensure smoothly running chain members 5,6 also through the curved sections 3d and 4d. The curved contour 7h of the chain engagement end 7b is in contact with the opposite guide surface 2b for holding the interlocking engagement members 7 in the chain openings.

The chain engagement end 7b of the cranked interlocking engagement members 7 fills only about half the height of the openings in the chain members 5,6 thus, leaving space for 7i the teeth of the sprockets 8 to enter the openings to drive the chain members by engaging the rollers 12. The cranked shape of the interlocking engagement members 7 also allows the interlocking end 7a to extend under the guide plate 2 and thus secure the chain remembers 5,6 from exiting the chain path 3,4 sideways.

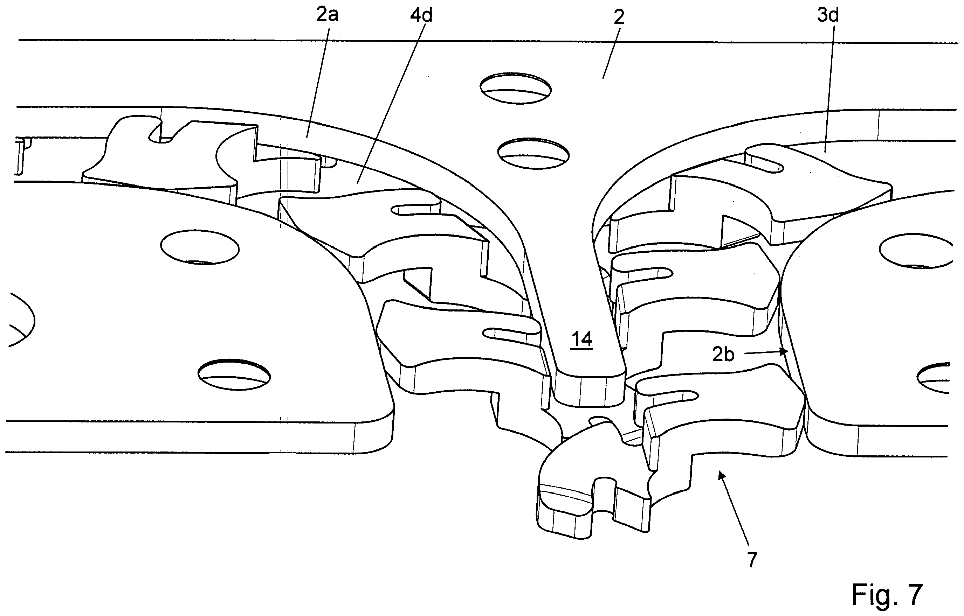

As shown in Fig. 7 the chain members 5,6 are at the chain exits 3e,4e separated by a partition member 14 formed by a protrusion of the guide plate 2 (the chain members are hidden in Fig. 7 to show the interlocking engagement members 7 and the partition member 14).

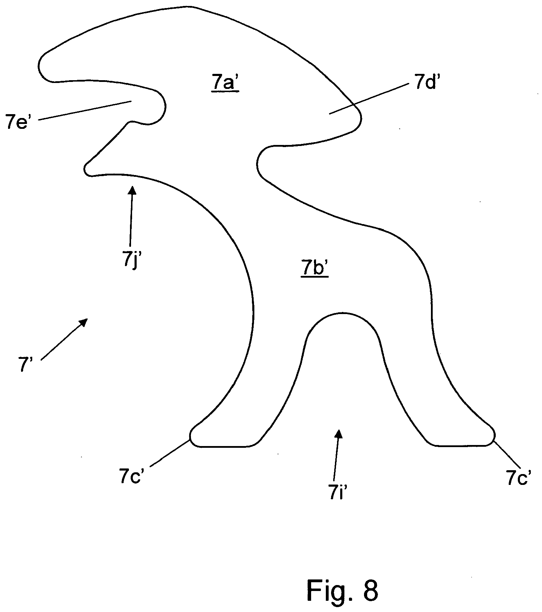

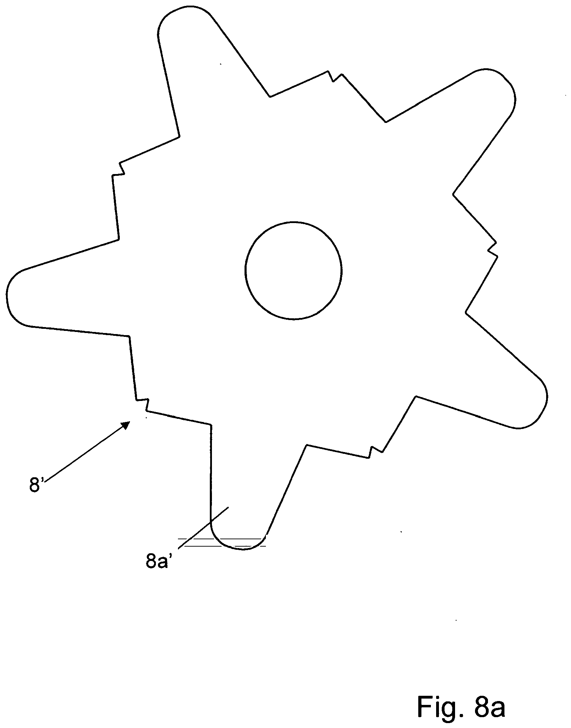

Fig. 8 shows another non-cranked embodiment of the interlocking engagement member 7'. The interlocking engagement member 7' has an interlocking end 7a' and a chain engagement end 7b'.

The chain engagement end 7b' is provided with protrusions 7c' that give the chain engagement end a width that is greater than the width of the chain openings. Thus, the interlocking engagement members 7' can be inserted into the chain openings from one side, but they cannot move onwards and leave the chain opening from the other side.

The chain engagement end 7b' is provided with a traverse recess 7i' for receiving a tooth 8a' of a sprocket 8' as shown in Fig 8a. The sprocket 7i' is provided with teeth 8a' that have the required shape and spacing to drive the chain members 5,6 by engaging the interlocking engagement members 7' in the traverse recesses 7i'.

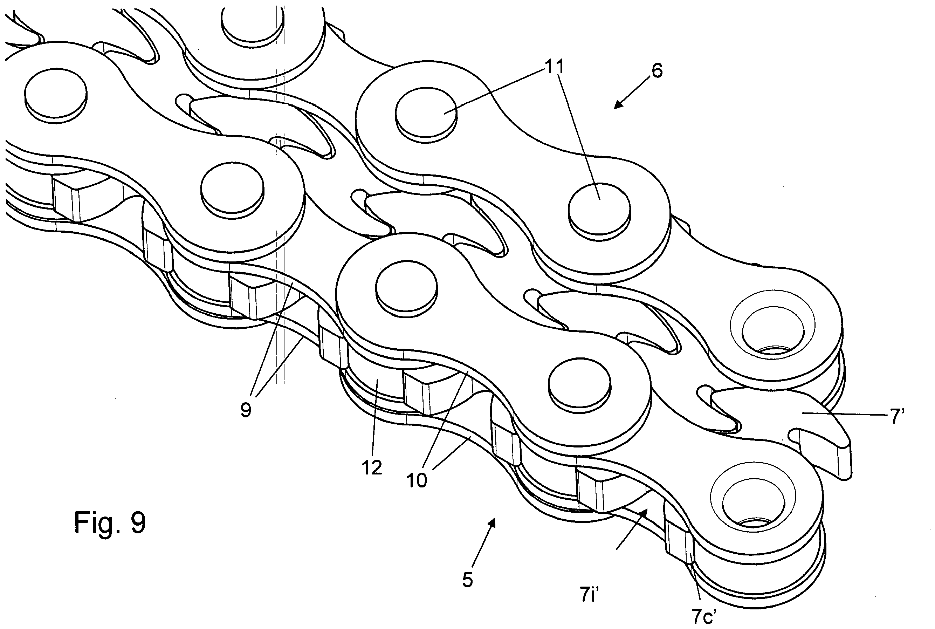

Fig. 9 illustrates in detail a part of two interlocked chain members 5,6 that are provided with the non-cranked interlocking engagement members 7' inserted in their chain openings.

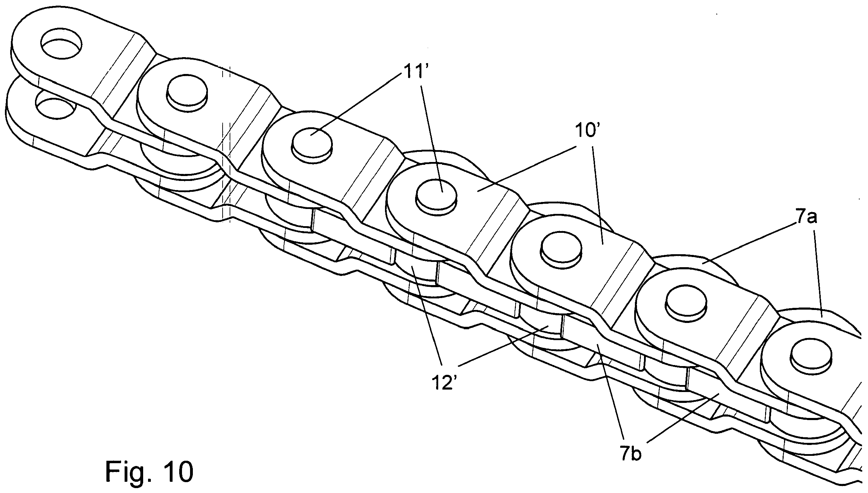

The chain members 5,6 may, as shown in Fig. 10 alternatively be build up from cranked plates 10' connected by parallel pins 11' with rollers 12'. The chain member 5,6 is shown from the side in which the chain engagement ends 7b of the interlocking engagement members 7 can be seen.

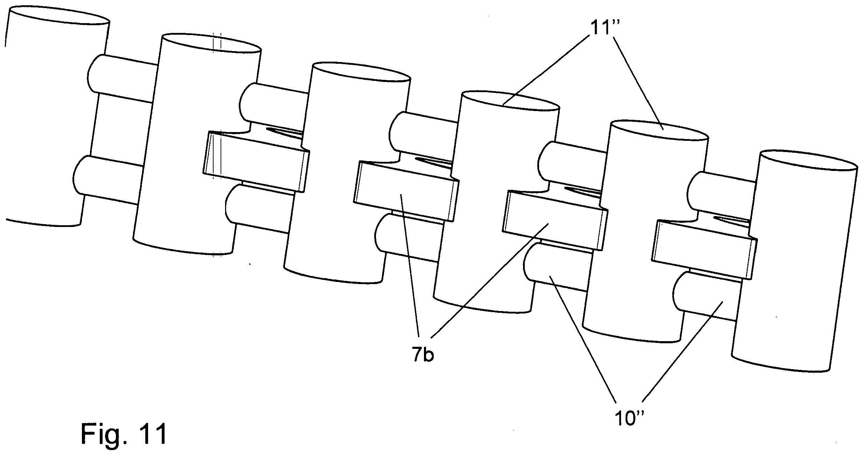

It is also possible, as shown in Fig. 11, to use chain members 5,6 in which the links 10" are formed by cords or cables to form a cable chain. The cords can be made of steel wire, Kevlar strings, nylon string or similar. The chain can be made by clamping a plurality of pins 11" onto a pair of long cords and then inserting the interlocking engagement members 7,7' into the openings of the chain members.

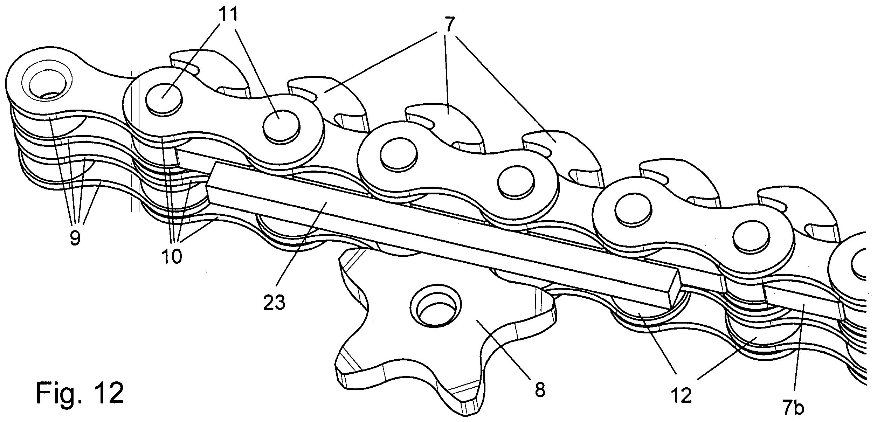

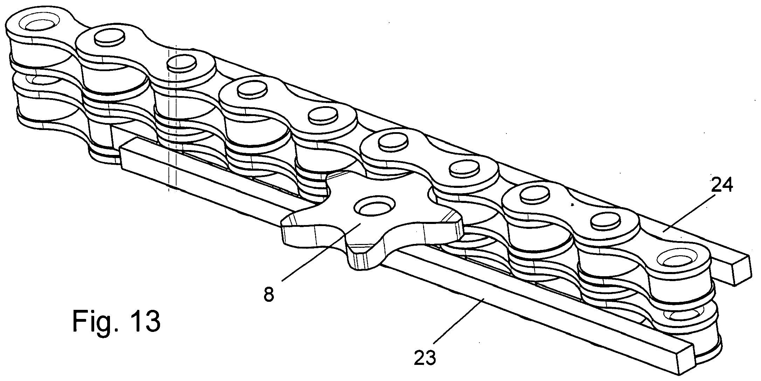

Figs. 12 and 13 show another preferred embodiment of the chain member in the form of a sprocket driven duplex chain. The interlocking engagement members 7 are of the non cranked type and not provided with any recess for receiving teeth of a sprocket. The interlocking engagement members 7 are inserted into the chain openings along one side of the duplex chain whilst the teeth of the sprocket 8 engage the chain opening along the other side of the duplex chain. There is a guide bar 23 that holds the interlocking engagement members 7 into the duplex chain, whilst another guide bar 24 keeps the chain member 5 in position relative to the sprocket 8. Straight guide bars 23,24 are illustrated in Figs. 12 and 13, but it is understood that the duplex chain according to this preferred embodiment can be used in an actuator with curved chain paths with a minimum change in construction.

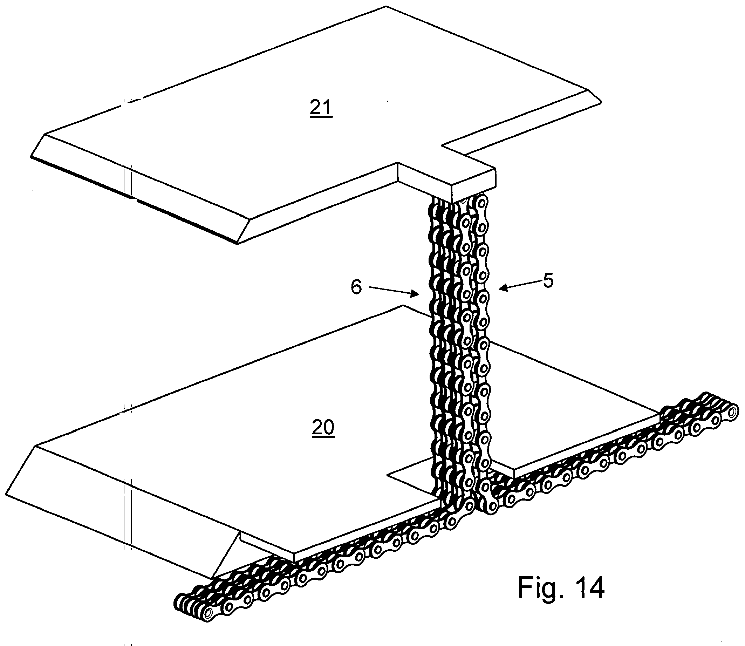

Fig. 14 shows a car lift with a base 20 and a lifting platform 21 that is actuated with two triplex chains 5,6 analogous to the duplex chains described above with reference to Figs. 12 and 13. For improved lateral stability the triplex chains are provided with interlocking engagement members in the chain openings along the both outer sides of the chain whilst the sprockets (not shown) engage the chain openings in the middle of the triplex chains 5,6.

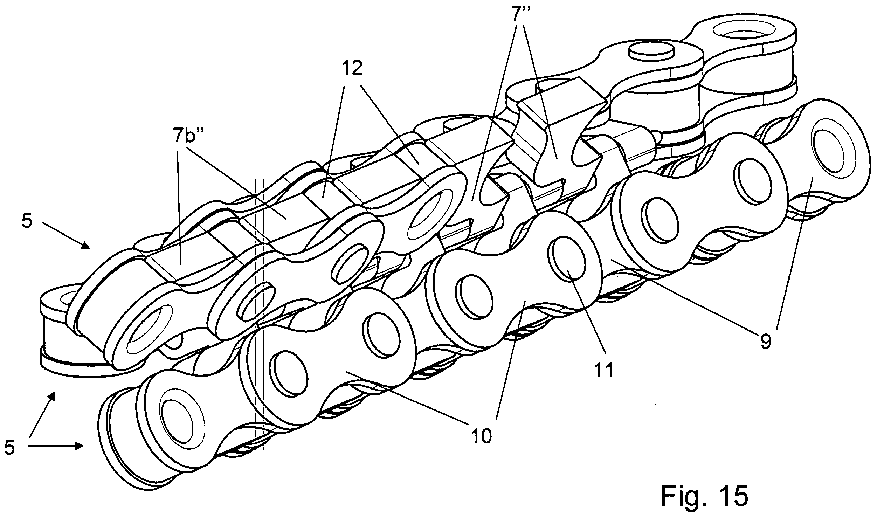

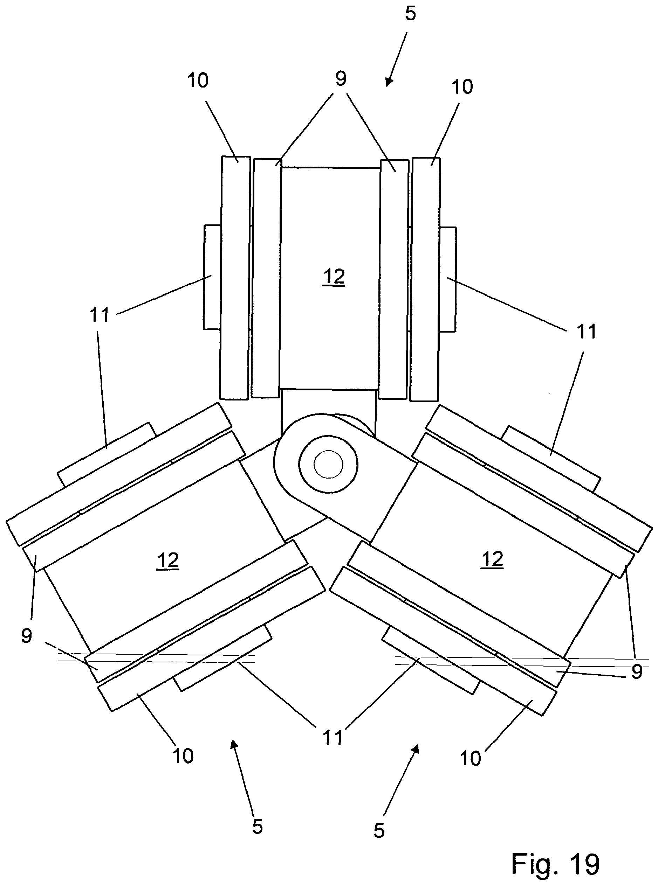

Figs. 15 and 19 show from different angles an actuator element comprising three chain members 5 that in the extended state form an omnidirectionally stable drive member. Such a drive member is e.g. suitable for use with an antenna actuator or the like (not shown). The chain members illustrated are standard drive chains with inner plates 9, outer plates 10, connecting pins 11 and rollers 12.

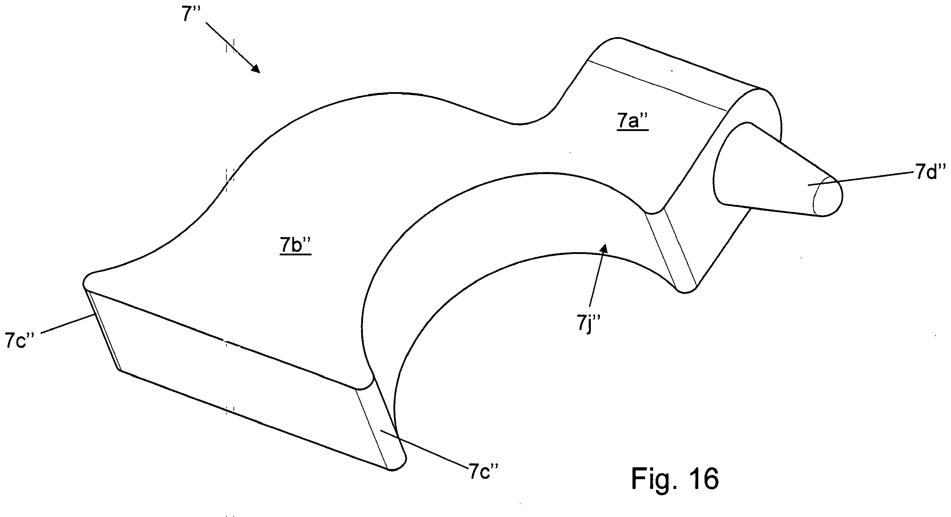

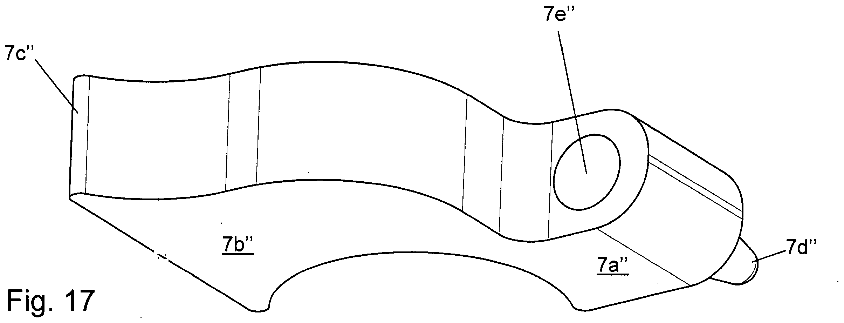

Figs. 16 and 17 show the interlocking engagement member 7" for interlocking three standard chains 5 back to back from different angles. The interlocking engagement member 7" comprises an interlocking and 7a'' provided on with a protrusion 7d" shaped like a rounded off truncated cone and an opposite recess 7e" with contours matching the protrusion 7d''. The chain retaining end 7b'' is provided with two protrusions 7c'' that gives the chain engagement end a width that is greater than the width of the chain openings. The chain interlocking end 7a'' is provided with a concavely curved contour 7j'' that serves as an abutment surface with the rollers 12. The curved contour 7j" maintains the required distance between the chain members 5.

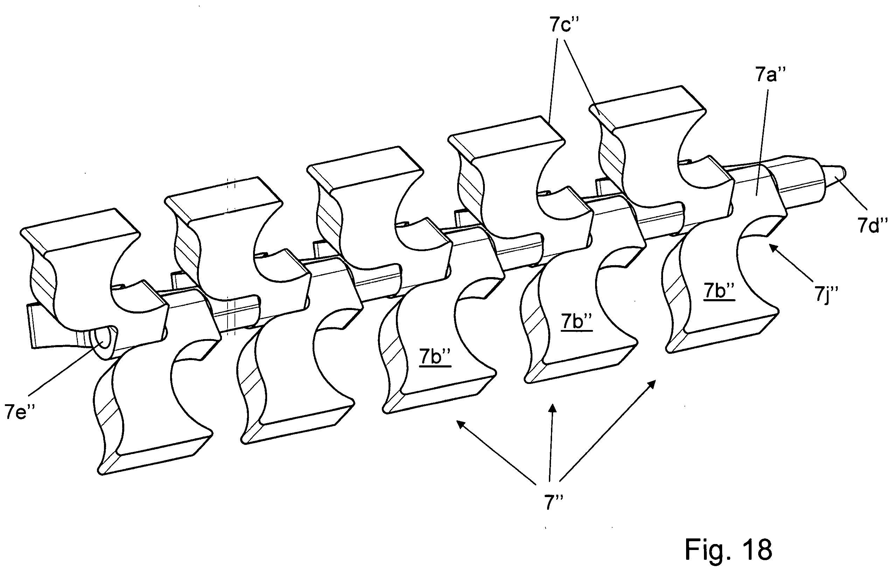

Fig. 18 is the same view as Fig. 15 with the chain members 5 hidden to show the interlocking engagement members 7" in their staggered interlocked arrangement.

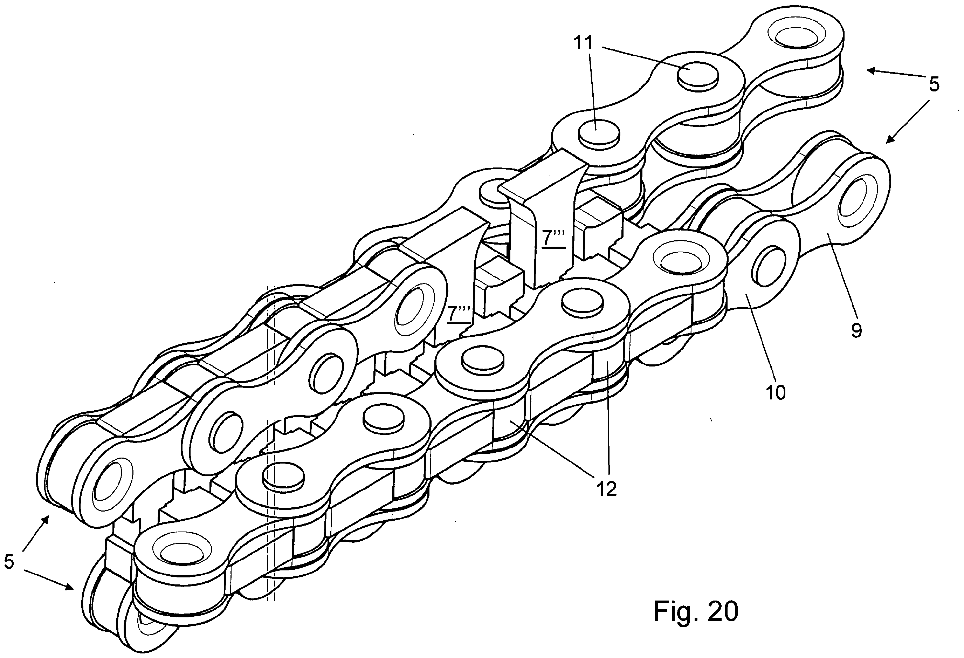

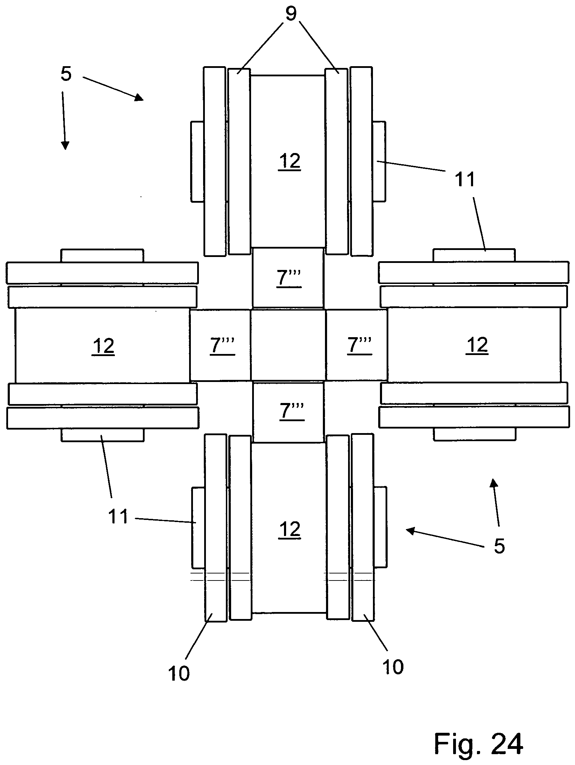

Figs. 20 and 24 show from different angles an actuator element comprising four chain members 5 that in the extended state form an omnidirectionally stable drive member. The chain members illustrated are standard drive chains with inner plates 9, outer plates 10, connecting pins 11 and rollers 12.

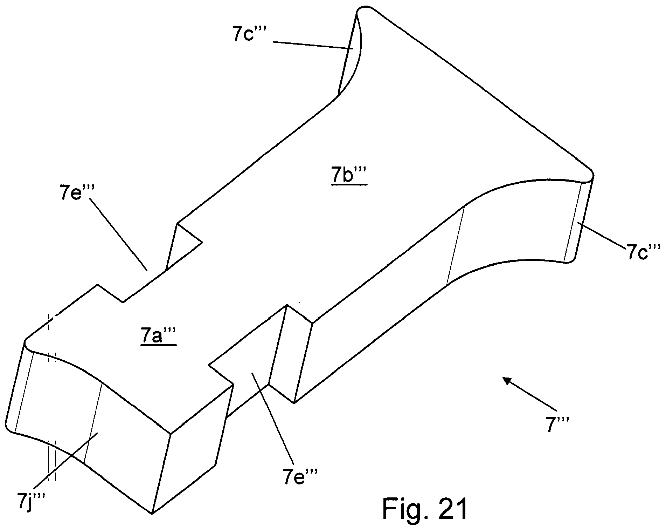

Fig. 21 shows the interlocking engagement member 7"' for interlocking four standard chains back to back. The interlocking engagement member 7"' comprises an interlocking end 7a"' provided with opposite recesses 7e"' that are capable of engaging corresponding recesses on other interlocking engagement members 7"'. The chain retaining end 7b"' is provided with two protrusions 7c"' that give the chain engagement end 7b"' a width that is greater than the width of the chain openings. The chain interlocking end 7a"' is on its free end provided with concavely curved surface 7j"' that serves as an abutment surface with the rollers 12. The curved contour 7j''' rests on the roller 12 of the opposite chain member 5 and thus maintains the required distance between the chain members.

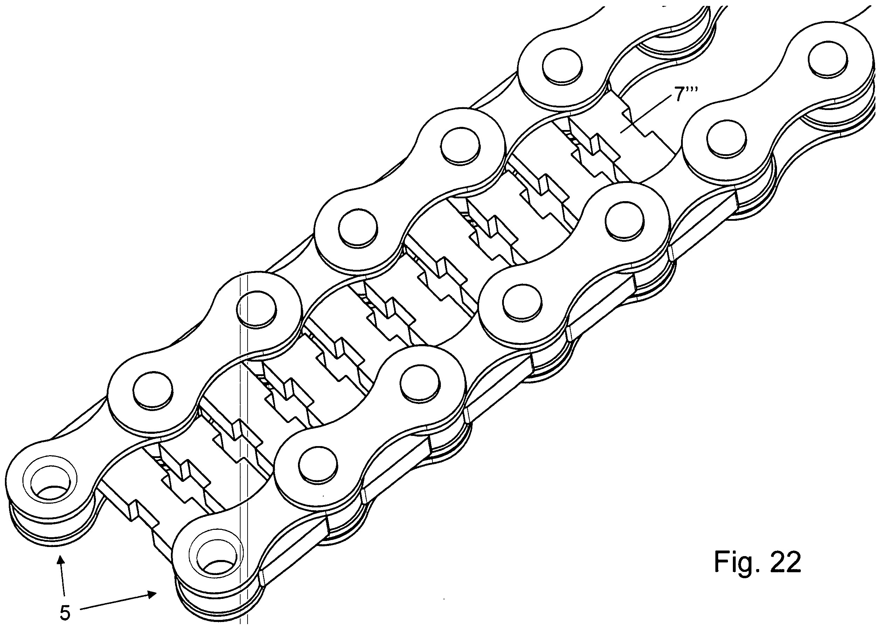

Fig. 22 is the same view as Fig. 15 with the two chain members 5 and their interlocking engagement members hidden to show the remaining interlocking engagement members 7"' in their staggered arrangement.

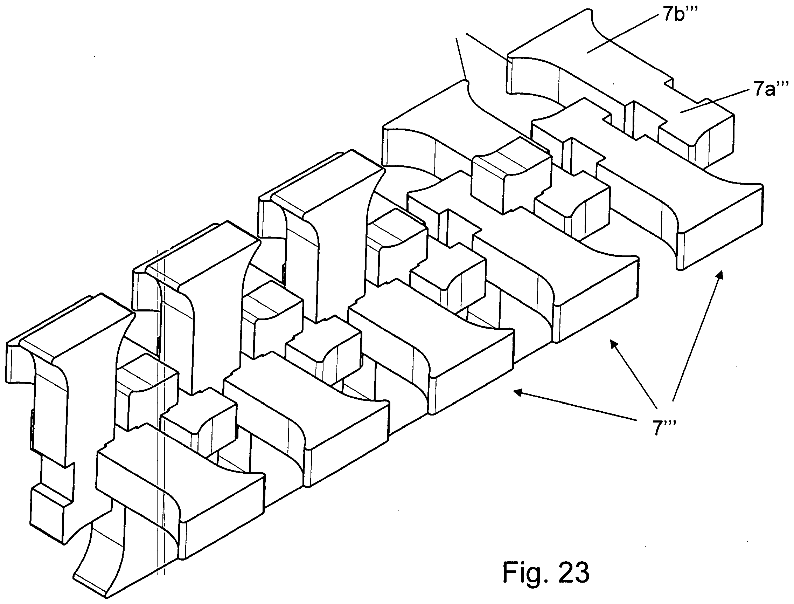

Fig. 23 is the same view as Fig. 15 with the four chain members 5 hidden to show the interlocking engagement members 7''' in their staggered interlocking arrangement.

Although the invention has been illustrated with a sprocket as drive member, it is of course possible to use other drive members, such as a spindle drive (not shown), that directly on the chain or the interlocking engagement members with a minimum change in construction.

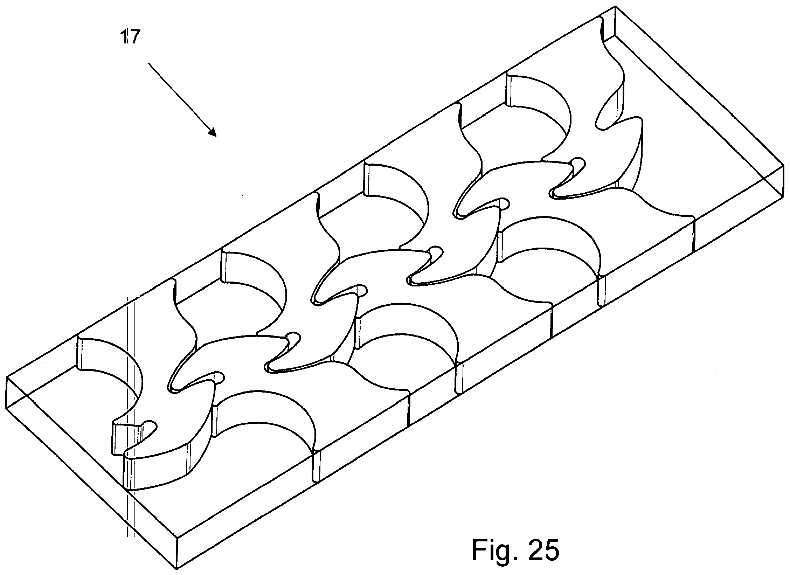

The interlocking engagement members can be produced by die stamping. Hereto, a blank of plate material 17 is provided. Then the interlocking engagement members are punched from the blank 17. Fig. 25 illustrates a blank in a transparent view with imaginarily interlocking engagement members placed therein to show how the interlocking elements can be punched out from the blank 17.

The interlocking engagement members can also be produced by extruding a profile with contours corresponding to that of the interlocking engagement member. The profile is then cut into slices that form intermediate or finished interlocking engagement members.

After the interlocking engagement members are punched out or sliced off they can be subjected to a pressing operation in which there are formed into cranked interlocking engagement members 7.

Alternatively, the interlocking engagement members can be produced by molding. Hereto a mold with an inner contours corresponding to the outer contours of the interlocking engagement member is provided, and the interlocking engagement members are molded by filling the mold with a molding material.

It is also possible to produce the interlocking engagement members by sintering. Hereto, a mold with an inner contour corresponding to the outer contour of the interlocking engagement member is provided. Then the mold is filled with a metal powder material or a metal powder mix. The mold is closed and a high pressure is exerted on the metal powder removed from the mold and exposed to high temperature to at least partially melt the metal powder.

Although the present invention has been described in detail for purpose of illustration, it is understood that such detail is solely for that purpose, and variations can be made therein by those skilled in the art without departing from the scope of the invention as defined by the claims. Thus, while the preferred embodiments of the devices and methods have been described in reference to the environment in which they were developed, they are merely illustrative of the principles of the inventions. Other embodiments and configurations may be devised without departing from the scope of the appended claims.

## Claims

1. An interlocking engagement member (7, 7', 7", 7"') for releasably interlocking side by side two or more chain members of a linear actuator, the chain members comprising chain openings between parallel driving pins (11, 11'), the interlocking engagement member (7, 7', 7", 7"') being suitable for insertion into said chain openings, the interlocking engagement member (7, 7', 7", 7"') having a chain engagement end (7b, 7b', 7b", 7b"') and an opposite interlocking end (7a, 7a', 7a", 7a"', wherein the chain engagement end (7b, 7b', 7b", 7b"') is provided with protrusions (7c, 7c', 7c") that give the chain engagement end (7b, 7b', 7b" , 7b"') a width that is greater than the width of the chain openings for retaining the interlocking engagement member (7, 7', 7'', 7"') in a chain opening of any of said two or more chain members, and wherein the interlocking end (7a, 7a', 7a", 7a"') is provided with a projection (7d, 7d', 7d") on one side and a corresponding recess (7e, 7e', 7e") on the opposite side, the projection (7d, 7d', 7d") being suitable for engaging the recess (7e, 7e', 7e") of another interlocking engagement member of the same type.

2. A drive chain (5,6) comprising links (9,10,10') connected by parallel driving pins (11,11') with or without rollers (12, 12'), with chain openings between the driving pins, and a plurality of interlocking engagement members (7, 7', 7", 7"') according to claim 1 for interlocking with another drive chain.

3. A drive chain according to claim 2, wherein the links (9,10,10') are formed by cords or cables to form a cable chain.

4. A drive chain according to claim 3, wherein the links are formed by plates, either by pairs of inner link plates (9) and outer link plates (10) or by identical pairs of cranked plates (10').

5. A linear actuator comprising two or more chains according to any one of claims 2 to 4, the chains (5,6) in their retracted position being accommodated in separate chain paths (3,4) in an actuator housing (1) in communication with chain exit openings (3e,4e) and at least one of the chains being in engagement with a drive member (8,8'), said chains in their extended position being connected to one another by said interlocking engagement members (7, 7', 7", 7"') for forming a joint actuator member.

6. A linear actuator according to the preceding claim, wherein the drive member is a sprocket (8,8').

7. A linear actuator according to the preceding claim, wherein the teeth (8a') of the sprocket enter a transversely extending recess (7i') in the chain engagement end (7b') of the interlocking members (7') for engaging the latter to drive the chain member (5,6).

8. A linear actuator according to claim 6, wherein the teeth of the sprocket (8) enter a lengthwise extending recess (7i) in the chain engagement end (7b) of the interlocking members (7) for engaging a driving pin or roller to drive the chain member.

9. A linear actuator according to claim 6, wherein the chain members (5,6) comprises inner link plates (9) and outer link plates (10) connecting the drive pins (11) and the teeth of the sprocket enter the space between the outer link plates to engage the latter for driving the chain member.

10. A linear actuator according to claim 5, wherein the drive member is a linear drive, such as a spindle drive, that engages a chain end.

11. A linear actuator according to claim 5, wherein the drive member is a wormwheel (8, 8').

12. A linear actuator according to any of claims 5 to 11, wherein the chain members (5,6) are duplex chains with first and second integral chain members side by side, the chain openings of the first chain member not being provided with interlocking engagement members, the chain openings of the second chain members being provided with interlocking engagement members (7, 7', 7", 7"') and the drive member (8) engaging the first chain member.

13. A linear actuator according to claim any of claims 5 to 12, wherein the chain members (5,6) are triplex chains, preferably provided with two rows of staggered interlocking engagement members, that in the extended state form an omnidirectionally stable drive member.

14. A linear actuator according to the preceding claim, in which a curved contour (7h) of the chain engagement end (7b) is in contact with a chain path guide surface (2b) for holding the interlocking engagement members in the chain openings.

15. A linear actuator according to claim any of claims 5 to 14, wherein the rollers engage (12, 12') a chain path guide surface (2a) for guiding the chain member (5,6) in the chain path (3, 4).

16. A linear actuator according to claim any of claims 5 to 15, wherein the links (9,10,10') engage the chain path guide surfaces (2a,2b) for guiding the chain member (5,6) in the chain path (3,4).

17. A linear actuator according to claim any of claims 5 to 16, wherein the interlocking ends (7a, 7a', 7a"') extend under the link plates (9, 10, 10') of the opposite chain member (5,6) to secure the chain members against transverse displacement.

18. The interlocking engagement member or drive chain or linear actuator according to any of the preceding claims, wherein the interlocking end (7a, 7a', 7a", 7a"') is suitable for interlocking with other interlocking ends (7a, 7a', 7a", 7a"') of other interlocking engagement members (7, 7', 7",7"') of the same type when two or more strings of staggered interlocking elements are engaged like a slide fastener.

19. The interlocking engagement member or drive chain or linear actuator according to any of the preceding claims, wherein the chain engagement end (7b, 7b', 7b", 7b"') is provided with a recess (7i, 7i') for receiving a tooth of a sprocket.

20. The interlocking engagement member or drive chain or linear actuator according to the preceding claim wherein the recess extends (7i') transversely over the chain engagement end (7b').

21. The interlocking engagement member or drive chain or linear actuator according to the preceding claim 19, wherein the recess (7i) extends lengthwise over the chain engagement end (7b), either centrally or on one side of the chain engagement end.

22. The interlocking engagement member or drive chain or linear actuator according to any of the preceding claims, wherein the interlocking end (7a) is cranked relative to the chain engagement end (7b).

23. The interlocking engagement member or drive chain or linear actuator according the preceding claim, comprising a shoulder (7g) opposite to the end face of the chain engagement end (7b) and a shoulder (7g) opposite to the end face of the interlocking end (7a).

24. The interlocking engagement member or drive chain or linear actuator according to any of the preceding claims, wherein the end face of the chain engagement end (7b) has a curved contour (7h) for facilitating smooth contact with a guide surface.

## Patentansprüche

1. Kopplungseingriffelement (7, 7', 7'', 7"') zum lösbaren Koppeln von zwei oder mehr Kettenelementen eines linearen Aktors nebeneinander, wobei die Kettenelemente Kettenöffnungen zwischen parallelen Antriebsbolzen (11, 11') umfassen, wobei das Kopplungseingriffelement (7, 7', 7'', 7''') zum Einfügen in die Kettenöffnungen geeignet ist, wobei das Kopplungseingriffelement (7, 7', 7", 7"') ein Ketteneingriffende (7b, 7b', 7b", 7b"') und ein gegenüberliegendes Kopplungsende (7a, 7a', 7a", 7a"') aufweist, wobei das Ketteneingriffende (7b, 7b', 7b", 7b"') zum Halten des Kopplungseingriffelements (7, 7', 7", 7"') in einer Kettenöffnung eines beliebigen der zwei oder mehr Kettenelemente mit Vorsprüngen (7c, 7c', 7c") versehen ist, die dem Ketteneingriffende (7b, 7b', 7b", 7b"') eine Breite geben, die größer als die Breite der Kettenöffnungen ist, und wobei das Kopplungsende (7a, 7a', 7a", 7a"') auf einer Seite mit einem Vorsprung (7d, 7d', 7d") und auf der gegenüberliegenden Seite mit einer entsprechenden Vertiefung (7e, 7e', 7e") versehen ist, wobei der Vorsprung (7d, 7d', 7d") dafür geeignet ist, sich mit der Vertiefung (7e, 7e', 7e'') eines anderen Kopplungseingriffelements desselben Typs in Eingriff zu befinden.

2. Antriebskette (5, 6), die Kettenglieder (9, 10, 10'), die durch parallele Antriebsbolzen (11, 11') mit oder ohne Rollen (12, 12') mit Kettenöffnungen zwischen den Antriebsbolzen verbunden sind, und mehrere Kopplungseingriffelemente (7, 7', 7", 7"') nach Anspruch 1 zum Koppeln mit einer anderen Antriebskette umfasst.

3. Antriebskette nach Anspruch 2, wobei die Kettenglieder (9, 10, 10') durch Seile oder Kabel gebildet sind, um eine Kabelkette zu bilden.

4. Antriebskette nach Anspruch 3, wobei die Kettenglieder durch Platten gebildet sind, entweder durch Paare von inneren Kettengliedplatten (9) und äußeren Kettengliedplatten (10) oder durch gleiche Paare gekröpfter Platten (10').

5. Linearer Aktor, der zwei oder mehr Ketten nach einem der Ansprüche 2 bis 4 umfasst, wobei die Ketten (5, 6) in ihrer eingezogenen Position in getrennten Kettenwegen (3, 4) in einem Aktorgehäuse (1) in Verbindung mit Kettenaustrittsöffnungen (3e, 4e) aufgenommen sind und sich mindestens eine der Ketten mit einem Antriebselement (8, 8') in Eingriff befindet, wobei die Ketten in ihrer ausgefahrenen Position zum Bilden eines verbundenen Aktorelements durch die Kopplungseingriffelemente (7, 7', 7", 7"') miteinander verbunden sind.

6. Linearer Aktor nach dem vorhergehenden Anspruch, wobei das Antriebselement ein Antriebsrad (8, 8') ist.

7. Linearer Aktor nach dem vorhergehenden Anspruch, wobei die Zähne (8a') des Antriebsrads in eine quer verlaufende Vertiefung (7i') im Ketteneingriffende (7b') der Kopplungselemente (7') eintreten, um mit Letzteren in Eingriff zu gelangen, um das Kettenelement (5, 6) anzutreiben.

8. Linearer Aktor nach Anspruch 6, wobei die Zähne des Antriebsrads (8) in eine der Länge nach verlaufende Vertiefung (7i) im Ketteneingriffende (7b) der Kopplungselemente (7) eintreten, um mit einem Antriebsbolzen oder einer Rolle in Eingriff zu gelangen, um das Kettenelement anzutreiben.

9. Linearer Aktor nach Anspruch 6, wobei die Kettenelemente (5, 6) innere Kettengliedplatten (9) und äußere Kettengliedplatten (10), die die Antriebsbolzen (11) verbinden, umfassen und die Zähne des Antriebsrads in den Raum zwischen den äußeren Kettengliedplatten eintreten, um zum Antreiben des Kettenelements mit Letzteren in Eingriff zu gelangen.

10. Linearer Aktor nach Anspruch 5, wobei das Antriebselement ein Linearantrieb, wie etwa ein Spindelantrieb, ist, der sich mit einem Kettenende in Eingriff befindet.

11. Linearer Aktor nach Anspruch 5, wobei das Antriebselement ein Schneckenrad (8, 8') ist.

12. Linearer Aktor nach einem der Ansprüche 5 bis 11, wobei die Kettenelemente (5, 6) Duplexketten mit nebeneinanderliegenden, ersten und zweiten einteiligen Kettenelementen sind, wobei die Kettenöffnungen des ersten Kettenelements nicht mit Kopplungseingriffelementen versehen sind, die Kettenöffnungen der zweiten Kettenelemente mit Kopplungseingriffelementen (7, 7', 7", 7"') versehen sind und das Antriebselement (8) sich mit dem ersten Kettenelement in Eingriff befindet.

13. Linearer Aktor nach einem der Ansprüche 5 bis 12, wobei die Kettenelemente (5, 6) Triplexketten sind, die vorzugsweise mit zwei Reihen gegeneinander versetzter Kopplungseingriffelementen versehen sind, die im ausgefahrenen Zustand ein richtungsunabhängig stabiles Antriebselement bilden.

14. Linearer Aktor nach dem vorhergehenden Anspruch, bei dem sich ein gekrümmter Umriss (7h) des Ketteneingriffendes (7b) zum Halten der Kopplungseingriffelemente in den Kettenöffnungen mit einer Kettenwegführungsfläche (2b) in Kontakt befindet.

15. Linearer Aktor nach einem der Ansprüche 5 bis 14, wobei sich die Rollen (12, 12') zum Führen des Kettenelements (5, 6) im Kettenweg (3, 4) mit einer Kettenwegführungsfläche (2a) in Eingriff befinden.

16. Linearer Aktor nach einem der Ansprüche 5 bis 15, wobei sich die Kettenglieder (9, 10, 10') zum Führen des Kettenelements (5, 6) im Kettenweg (3, 4) mit den Kettenwegführungsflächen (2a, 2b) in Eingriff befinden.

17. Linearer Aktor nach einem der Ansprüche 5 bis 16, wobei sich die Kopplungsenden (7a, 7a', 7a''') unter die Kettengliedplatten (9, 10, 10') des gegenüberliegenden Kettenelements (5, 6) erstrecken, um die Kettenelemente gegen eine Querverschiebung zu sichern.

18. Kopplungseingriffelement oder Antriebskette oder linearer Aktor nach einem der vorhergehenden Ansprüche, wobei das Kopplungsende (7a, 7a', 7a", 7a"') zum Koppeln mit anderen Kopplungsenden (7a, 7a', 7a", 7a"') anderer Kopplungseingriffelemente (7, 7', 7", 7"') desselben Typs geeignet ist, wenn sich zwei oder mehr Stränge gegeneinander versetzter Kopplungselemente wie ein Reißverschluss in Eingriff befinden.

19. Kopplungseingriffelement oder Antriebskette oder linearer Aktor nach einem der vorhergehenden Ansprüche, wobei das Ketteneingriffende (7b, 7b', 7b", 7b"') zum Aufnehmen eines Zahns eines Antriebsrads mit einer Vertiefung (7i, 7i') versehen ist.

20. Kopplungseingriffelement oder Antriebskette oder linearer Aktor nach einem der vorhergehenden Ansprüche, wobei sich die Vertiefung (7i') quer über das Ketteneingriffende (7b') erstreckt.

21. Kopplungseingriffelement oder Antriebskette oder linearer Aktor nach den vorhergehenden Anspruch 19, wobei sich die Vertiefung (7i) entweder mittig oder auf einer Seite des Ketteneingriffendes der Länge nach über das Ketteneingriffende (7b) erstreckt.

22. Kopplungseingriffelement oder Antriebskette oder linearer Aktor nach einem der vorhergehenden Ansprüche, wobei das Kopplungsende (7a) in Bezug auf das Ketteneingriffende (7b) gekröpft ist.

23. Kopplungseingriffelement oder Antriebskette oder linearer Aktor nach dem vorhergehenden Anspruch, die eine Schulter (7g), die der Endfläche des Ketteneingriffendes (7b) gegenüberliegt, und eine Schulter (7g), die der Endfläche des Kopplungsendes (7a) gegenüberliegt, umfassen.

24. Kopplungseingriffelement oder Antriebskette oder linearer Aktor nach einem der vorhergehenden Ansprüche, wobei die Endfläche des Ketteneingriffendes (7b) zum Erleichtern eines gleichmäßigen Kontakts mit einer Führungsfläche einen gekrümmten Umriss (7h) aufweist.

## Revendications

1. Élément d'engagement de verrouillage (7, 7', 7", 7"') pour verrouiller côte à côte, de manière amovible, deux éléments de chaîne ou plus d'un actionneur linéaire, ces éléments de chaîne comportant des ouvertures de chaîne entre des axes d'entraînement parallèles (11, 11'), cet élément d'engagement de verrouillage (7, 7', 7", 7"') étant adapté de façon à être inséré dans lesdites ouvertures de chaîne, cet élément d'engagement de verrouillage (7, 7', 7", 7"') ayant une extrémité d'engagement avec la chaîne (7b, 7b', 7b", 7b"') et une extrémité opposée de verrouillage (7a, 7a', 7a", 7a"'), l'extrémité d'engagement avec la chaîne (7b, 7b', 7b", 7b"') étant pourvue de protubérances (7c, 7c', 7c") qui donnent à l'extrémité d'engagement avec la chaîne (7b, 7b', 7b", 7b"') une largeur qui est plus grande que la largeur des ouvertures de chaîne pour maintenir l'élément d'engagement de verrouillage (7, 7', 7", 7"') dans une ouverture de chaîne de n'importe lequel desdits deux éléments de chaîne ou plus, et l'extrémité de verrouillage (7a, 7a', 7a", 7a"') étant pourvue d'une saillie (7d, 7d', 7d'') sur un côté et d'un évidement correspondant (7e, 7e', 7e") sur le côté opposé, cette saillie (7d, 7d', 7d") étant adaptée de façon à s'engager avec l'évidement (7e, 7e', 7e") d'un autre élément d'engagement de verrouillage du même type.

2. Chaîne d'entraînement (5, 6) comportant des maillons (9, 10, 10') reliés par des axes d'entraînement parallèles (11, 11') avec ou sans rouleaux (12, 12'), avec des ouvertures de chaîne entre les axes d'entraînement, et une pluralité d'éléments d'engagement de verrouillage (7, 7', 7", 7"') selon la revendication 1 pour verrouiller avec une autre chaîne d'entraînement.

3. Chaîne d'entraînement selon la revendication 2, dans laquelle les maillons (9, 10, 10') sont formés par des cordons câblés ou des câbles pour former une chaîne câble.

4. Chaîne d'entraînement selon la revendication 3, dans laquelle les maillons sont formés par des plaques, soit par des paires de plaques de chaîne internes (9) et de plaques de chaîne externes (10), soit par des paires identiques de plaques coudées (10').

5. Actionneur linéaire comportant deux chaînes ou plus selon l'une quelconque des revendications 2 à 4, ces chaînes (5, 6) dans leur position rentrée étant logées dans des chemins de chaîne séparés (3, 4) dans un logement d'actionneur (1) en communication avec des ouvertures de sortie de chaîne (3e, 4e) et au moins une des chaînes étant engagée avec un élément d'entraînement (8, 8'), lesdites chaînes dans leur position déployée étant reliées l'une à l'autre par lesdits éléments d'engagement de verrouillage (7, 7', 7", 7"') pour former un élément d'actionneur combiné.

6. Actionneur linéaire selon la revendication précédente, dans lequel l'élément d'entraînement est une roue dentée (8, 8').

7. Actionneur linéaire selon la revendication précédente, dans lequel les dents (8a') de la roue dentée pénètrent dans un évidement s'étendant transversalement (7i') dans l'extrémité d'engagement avec la chaîne (7b') des éléments de verrouillage (7') pour s'engager avec ces derniers de façon à entraîner l'élément de chaîne (5, 6).

8. Actionneur linéaire selon la revendication 6, dans lequel les dents de la roue dentée (8) pénètrent dans un évidement s'étendant longitudinalement (7i) dans l'extrémité d'engagement avec la chaîne (7b) des éléments d'engagement de verrouillage (7) pour s'engager avec un axe ou un rouleau d'entraînement de façon à entraîner l'élément de chaîne.

9. Actionneur linéaire selon la revendication 6, dans lequel les éléments de chaîne (5, 6) comportent des plaques de chaîne internes (9) et des plaques de chaîne externes (10) reliant les axes d'entraînement (11) et les dents de la roue dentée pénètrent dans l'espace entre les plaques de chaîne externes pour s'engager avec ces dernières de façon à entraîner l'élément de chaîne.

10. Actionneur linéaire selon la revendication 5, dans lequel l'élément d'entraînement est un entraînement linéaire, tel qu'un entraînement de broche, qui s'engage avec une extrémité de chaîne.

11. Actionneur linéaire selon la revendication 5, dans lequel l'élément d'entraînement est une roue à vis sans fin (8, 8').

12. Actionneur linéaire selon l'une quelconque des revendications 5 à 11, dans lequel les éléments de chaîne (5, 6) sont des chaînes doubles avec un premier et un deuxième élément de chaîne solidaires côte à côte, les ouvertures de chaîne du premier élément de chaîne n'étant pas pourvues d'éléments d'engagement de verrouillage, les ouvertures de chaîne des deuxièmes éléments de chaîne étant pourvus d'éléments d'engagement de verrouillage (7, 7', 7", 7"') et l'élément d'entraînement (8) s'engageant avec le premier élément de chaîne.

13. Actionneur linéaire selon l'une quelconque des revendications 5 à 12, dans lequel les éléments de chaîne (5, 6) sont des chaînes triples, pourvues de préférence de deux rangées d'éléments d'engagement de verrouillage en quinconce, qui forment, dans l'état déployé, un élément d'entraînement stable de façon omnidirectionnelle.

14. Actionneur linéaire selon la revendication précédente, dans lequel un contour incurvé (7h) de l'extrémité d'engagement avec la chaîne (7b) est en contact avec une surface de guidage de chemin de chaîne (2b) pour maintenir les éléments d'engagement de verrouillage dans les ouvertures de chaîne.

15. Actionneur linéaire selon l'une quelconque des revendications 5 à 14, dans lequel les rouleaux (12, 12') s'engagent avec une surface de guidage de chemin de chaîne (2a) pour guider l'élément de chaîne (5, 6) dans le chemin de chaîne (3, 4).

16. Actionneur linéaire selon l'une quelconque des revendications 5 à 15, dans lequel les maillons (9, 10, 10') s'engagent avec les surfaces de guidage du chemin de chaîne (2a, 2b) pour guider l'élément de chaîne (5, 6) dans le chemin de chaîne (3, 4).

17. Actionneur linéaire selon l'une quelconque des revendications 5 à 16, dans lequel les extrémités de verrouillage (7a, 7a', 7a"') s'étendent sous les plaques de chaîne (9, 10, 10') de l'élément de chaîne opposé (5, 6) de façon à empêcher les éléments de chaîne de se déplacer transversalement.

18. Élément d'engagement de verrouillage ou chaîne d'entraînement ou actionneur linéaire selon l'une quelconque des revendications précédentes, dans lequel l'extrémité de verrouillage (7a, 7a', 7a", 7a"') est adaptée de façon à se verrouiller avec d'autres extrémités de verrouillage (7a, 7a', 7a", 7a"') d'autres éléments d'engagement de verrouillage (7, 7', 7", 7"') du même type lorsque deux trains ou plus d'éléments de verrouillage en quinconce sont engagés comme une fermeture à glissière.

19. Élément d'engagement de verrouillage ou chaîne d'entraînement ou actionneur linéaire selon l'une quelconque des revendications précédentes, dans lequel l'extrémité d'engagement avec la chaîne (7b, 7b', 7b", 7b"') est pourvue d'un évidement (7i, 7i') pour recevoir une dent d'une roue dentée.

20. Élément d'engagement de verrouillage ou chaîne d'entraînement ou actionneur linéaire selon l'une quelconque des revendications précédentes, dans lequel l'évidement (7i') s'étend transversalement au-dessus de l'extrémité d'engagement avec la chaîne (7b').

21. Élément d'engagement de verrouillage ou chaîne d'entraînement ou actionneur linéaire selon l'une quelconque des revendications précédentes, dans lequel l'évidement (7i) s'étend longitudinalement au-dessus de l'extrémité d'engagement avec la chaîne (7b), soit centralement, soit sur un côté de l'extrémité d'engagement avec la chaîne.

22. Élément d'engagement de verrouillage ou chaîne d'entraînement ou actionneur linéaire selon l'une quelconque des revendications précédentes, dans lequel l'extrémité de verrouillage (7a) est coudée par rapport à l'extrémité d'engagement avec la chaîne (7b).

23. Élément d'engagement de verrouillage ou chaîne d'entraînement ou actionneur linéaire selon l'une quelconque des revendications précédentes, comportant un épaulement (7g) opposé à la face extrême de l'extrémité d'engagement avec la chaîne (7b) et un épaulement (7g) opposé à la face extrême de l'extrémité de verrouillage (7a).

24. Élément d'engagement de verrouillage ou chaîne d'entraînement ou actionneur linéaire selon l'une quelconque des revendications précédentes, dans lequel la face extrême de l'extrémité d'engagement avec la chaîne (7b) a un contour incurvé (7h) pour faciliter un contact uniforme avec une surface de guidage.
